# EUROPEAN PATENT APPLICATION

(11) **EP 2 863 405 A1**
(43) Date of publication of application: **22.04.2015**
(21) Application number: 14186160.9
(22) Date of filing: 24.09.2014
(51) Int. Cl.: H01H 21/04, C09K 3/10, H01H 21/28

(54) **Limit switch**

(30) Priority: 15.10.2013 JP 2013215071
(71) Applicant: Omron Corporation, Kyoto-shi, Kyoto 600-8530 (JP)
(72) Inventor: Tsukimori, Kazuyuki, Okayama, 703-8502 (JP); Takahashi, Manabu, Okayama, 703-8502 (JP); Yamamoto, Yuki, Kyoto-shi, Kyoto 600-8530 (JP); Yamamoto, Hidenori, Okayama, 703-8502 (JP)
(74) Representative: Kilian Kilian & Partner

(57) **Abstract**

Provided is a switch capable of suppressing contact failure in a contact point and maintaining high airtightness for a long time even under a high temperature environment. The switch at least includes a switching mechanism (11), a housing (3), and an actuator (7), at least one connection which can be in direct contact with outside air, out of connections between members of the switch, being provided with a sealing member, rubber contained in the sealing member mainly containing fluorocarbon rubber and not containing silicone rubber.

## Description

### Technical Field

The present invention relates to a switch. More specifically, the present invention relates to a switch having high airtightness and high contact reliability even under a high-temperature environment.

### Background Art

Conventionally, there have been known limit switches used to, in a production line of a factory, automatically start a processing machine upon detecting that an object such as a product to be processed is transferred to a predetermined position.

Meanwhile, among switches, for example, microswitches have been widely used which are configured such that a switching mechanism is provided inside a switch case and switching of electric conduction between terminals is carried out by snapping a movable part of the switching mechanism in response to slide of a push button serving as an actuator.

Conventionally, according to switches such as the limit switches and the microswitches, silicone rubber has been widely used, as a sealing member, in the vicinity of the switches or in a sealed space where the switches are provided. This is mainly because the silicone rubber has high thermal resistance and high cold resistance.

However, siloxane gas (for example, disiloxane) volatizes from the silicone rubber. In a case where the siloxane gas enters the switch case, the siloxane gas adheres, as an insulator such as SiO₂, to a contact point of the switching mechanism, thereby causing contact failure.

That is, in a case where the contact point is opened and closed under an atmosphere containing low molecular siloxane gas, arc discharge occurs and, accordingly, the low molecular siloxane gas is broken down. Resulting Si bonds to surrounding oxygen, so that SiO₂ deposits on a surface of the contact point.

In order that such adhesion of an insulator is prevented, a limit switch has been conventionally developed in which a contact point is arranged so as to be apart as much as possible from silicone rubber.

For example, Patent Literature 1 discloses a technique of reducing contact failure by providing a diaphragm, made of silicone rubber, at a position which is located on an opposite side of an embedded switch and which is separate from an end of a plunger so as to dilute siloxane gas, volatizing from the silicone rubber, in a large space between the diaphragm and a contact point of the embedded switch.

Further, the microswitches are arranged so as to have a sealed structure by (i) sealing a connection of the switch case and (ii) covering a sliding part of the push button with a rubber cap or a gasket.

### Citation List

### Patent Literature 1

Japanese Patent Application Publication, Tokukai, No. 2003-086047 A (Publication Date: March 20, 2003)

### Summary of Invention

### Technical Problem

However, according to the technique disclosed in Patent Literature 1, although the contact point is arranged so as to be apart as much as possible from the silicone rubber, the fact remains that the silicone rubber is used. Therefore, there is a problem that it is not possible to completely get rid of contact failure caused by the siloxane gas.

Furthermore, the silicone rubber has such a chemical characteristic that an intermolecular bond is rough. Therefore, there is not only a problem that the silicone rubber lets the siloxane gas volatilize from the silicone rubber, but also a problem that the silicone rubber easily lets gas, such as siloxane gas existing in outside air, permeate the silicone rubber.

Moreover, the switches, such as the limit switches, are often used under a severe environment (for example, a high temperature environment) in a state where oil and/or the like easily adhere to the switches. Therefore, it is required to maintain high airtightness for a long time even under a high temperature environment while avoiding the foregoing contact failure in the contact point.

The present invention has been made in view of the above problems, and an object of the present invention is to provide a switch capable of (i) solving a problem of contact failure, caused by siloxane gas, in a contact point and (ii) maintaining high airtightness for a long time even under a high temperature environment.

### Solution to Problem

The inventors of the present invention have focused their attention to the above problems and devoted themselves to study, so that the inventors have found that it is possible to solve the problems by using, as a sealing member, an elastic material excellent in gas blocking characteristic and thermal resistance, without using silicone rubber. In this manner, the inventors of the present invention have made the present invention.

That is, in order to attain the object, a switch in accordance with the present invention is a switch including: a switching mechanism; a housing in which the switching mechanism is provided; and an actuator, which is slidable, for causing the switching mechanism to operate, at least one connection which can be in direct contact with outside air, out of connections between members of the switch, being provided with a sealing member, rubber contained in the sealing member mainly containing fluorocarbon rubber and not containing silicone rubber.

According to the above configuration, the rubber contained in the sealing member, which can be in direct contact with outside air, mainly contains fluorocarbon rubber and does not contain silicone rubber. Therefore, even in a case where the switch is used under an environment where siloxane gas volatizes from the silicone rubber, it is possible to prevent the siloxane gas from entering the switching mechanism, and accordingly possible to prevent an insulator from depositing on a contact point of the switching mechanism. As a result, it is possible to suppress contact failure.

Furthermore, the fluorocarbon rubber is extremely low in gas permeation coefficient, as compared with the silicone rubber. Therefore, according to the above configuration, even in a case where the outside air contains siloxane gas, the sealing member does not easily let the siloxane gas permeate the sealing member. Therefore, it is also possible to effectively suppress contact failure caused by the siloxane gas in the outside air.

Moreover, the fluorocarbon rubber is excellent in thermal resistance, oil resistance, and chemical resistance. Therefore, even in a case where the switch is used in a state where paint, oil, and/or the like easily adhere to the switch under a high temperature environment (for example, under an atmosphere at a temperature of up to 120°C, such as a paint line for a car), it is possible to maintain high airtightness for a long time period, and accordingly possible to appropriately protect the contact point of the switching mechanism.

### Advantageous Effects of Invention

According to the present invention, it is possible to provide a switch capable of (i) solving a problem of contact failure, caused by siloxane gas, in a contact point and (ii) maintaining high airtightness for a long time even under a high temperature environment.

### Brief Description of Drawings

Fig. 1 is a perspective view illustrating a limit switch in accordance with an embodiment of the present invention.
Fig. 2 is a cross-sectional view illustrating the limit switch illustrated in Fig. 1.
Fig. 3 is a cross sectional view illustrating a conventional limit switch in which a sealing member, with which a connection between an actuator and an attachment block is provided, is not an oil seal.
Fig. 4 is a view illustrating (i) a result of observation made, with the use of a scanning electron microscope (SEM), with respect to a surface of a movable contact point and a surface of a fixed contact point of each of limit switches which have been subjected to an opening and closing test described in Example 2 and (ii) a result of a component analysis made with respect to an arc product.
Fig. 5 is a view illustrating (i) the result of the observation made, with the use of the scanning electron microscope (SEM), with respect to the surface of the movable contact point and the surface of the fixed contact point of each of the limit switches which have been subjected to the opening and closing test described in Example 2 and (ii) a result of an analysis made with respect to the arc product deposited on each of the movable contact point and the fixed contact point in terms of how Si, C, Au, and Ag adhered.
Fig. 6 is a view illustrating a measurement circuit used in a case where each of limit switches, used in Comparative Example 1 for comparison, was measured in terms of dynamic contact resistance.
Fig. 7 is a view illustrating a result of measurement of the dynamic contact resistance of each of the limit switches used in Comparative Example 1 for comparison.
Fig. 8 is a view illustrating (i) a result of visual observation of a surface of each contact point, which has been opened and closed 400,000 times, of the limit switches used in Comparative Example 1 and (ii) a result of a component analysis made with respect to each arc product.

### Description of Embodiments

The following description will discuss embodiments of the present invention in detail. In the following description, identical components are given identical reference numerals. The identical components have identical names and functions. Therefore, detailed description of such components will not be repeatedly provided.

A switch of the present invention is a switch including: a switching mechanism; a housing in which the switching mechanism is provided; and an actuator, which is slidable, for causing the switching mechanism to operate, at least one connection which can be in direct contact with outside air, out of connections between members of the switch, being provided with a sealing member, rubber contained in the sealing member mainly containing fluorocarbon rubber and not containing silicone rubber.

### <Embodiment 1>

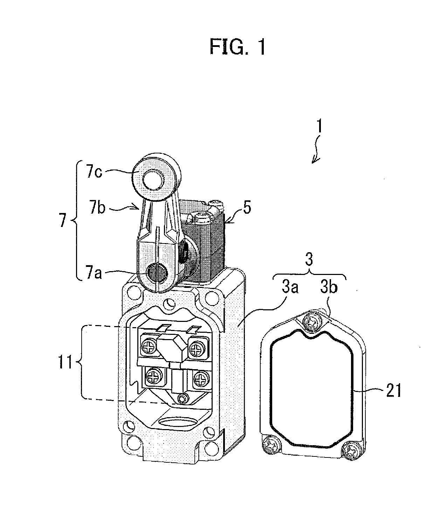

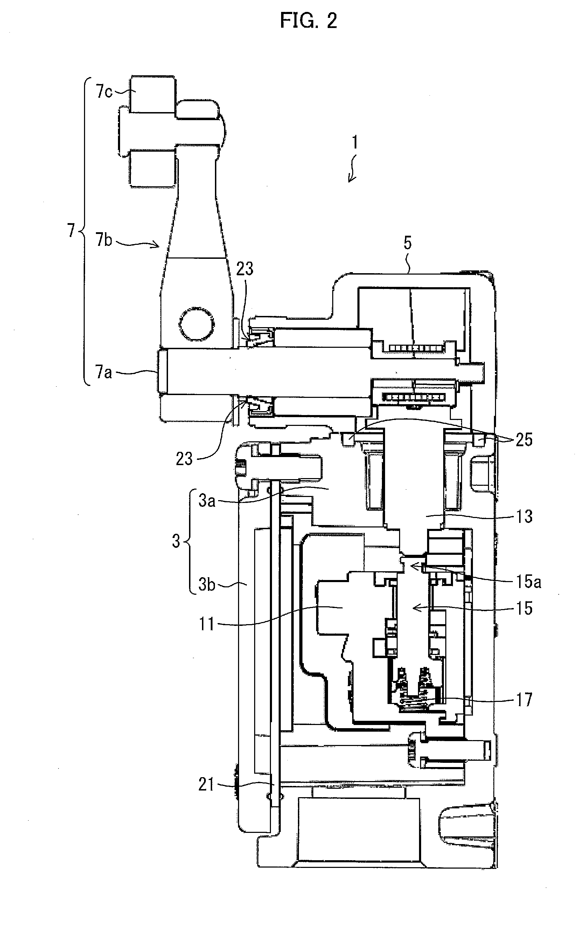

First, the following description will discuss, with reference to the drawings, a case where a switch in accordance with the present invention is a limit switch. Fig. 1 is a perspective view illustrating a limit switch in accordance with Embodiment 1 of the present invention. Fig. 2 is a cross-sectional view illustrating the limit switch. The limit switch detects, for example, a position, a change, a movement, or a passage of an object to be detected, and then outputs an ON signal or an OFF signal depending on a detected result.

As illustrated in Fig. 1, a limit switch 1 incudes a housing 3, an attachment block 5, and an actuator 7.

A switching mechanism 11 is provided in an inner space of the housing 3. The housing 3 protects the switching mechanism 11 from an external force, water, oil, gas, dust, and the like. The housing 3 is made up of (i) a housing body 3a having an opening through which the switching mechanism 11 is provided in the inner space and (ii) a lid 3b for closing the opening. A material of the housing 3 is not limited in particular, and the housing 3 can be made of, for example, resin, metal, or the like.

The attachment block 5 is provided on an upper part of the housing 3. The actuator 7 is slidably (rotatably) provided on the attachment block 5. The actuator 7 includes a rotating shaft 7a, an arm (lever) 7b, and a roller 7c with which an object (object to be detected) is to be in contact.

The actuator 7 protrudes from the attachment block 5. A home position of the actuator 7 is a position where no external force, caused by contacting with an object, is applied to the actuator 7 (that is, a position where the actuator 7 is not in contact with an object and does not rotate). Fig. 1 illustrates a case where the home position of the actuator 7 is a position where the actuator 7 remains stationary in a direction of 0 (zero) o'clock of a clock.

In Fig. 1, in a case where a force is applied to the actuator 7 from a left side of the actuator 7, the actuator 7 rotates clockwise around the home position. Thereafter, in a case where such a force is removed, the actuator 7 returns to the home position. On the other hand, in a case where a force is applied to the actuator 7 from a right side of the actuator 7, the actuator 7 rotates counterclockwise around the home position. Thereafter, in a case where such a force is removed, the actuator 7 returns to the home position. The switching mechanism 11 is configured so as to operate in response to a rotation of the actuator 7 (later described).

As illustrated in Fig. 2, a reference numeral 13 indicates a plunger, a reference numeral 15 indicates an operating shaft, and a reference numeral 17 indicates a coiled spring. The plunger 13 is supported inside the housing body 3a so as to be vertically movable. An end part of the rotating shaft 7a of the actuator 7 is in contact with an end of the plunger 13 in a longitudinal direction of the plunger 13.

Such a biasing force, which causes the plunger 13 to return to a reference position, is applied to the operating shaft 15 by the coiled spring 17. A position, where the plunger 13 is held by the operating shaft 15 while being lifted to the limit by the coiled spring 17, is the reference position of the plunger 13.

The end part of the rotating shaft 7a rotates in response to rotation of the actuator 7. This allows a force to be applied to the plunger 13 in the longitudinal direction of the plunger 13.

This causes the plunger 13 to (i) move from the reference position along the longitudinal direction and (ii) drive downward an upper end part 15a of the operating shaft 15, which upper end part 15a is exposed in a top surface of the switching mechanism 11. This ultimately causes the operating shaft 15 to be pushed down.

When the actuator 7 returns to the home position, the plunger 13 also returns to the reference position due to the biasing force of the coiled spring 17. Such displacement of the plunger 13 and the operating shaft 15 causes a contact point (not illustrated) of the switching mechanism 11 to be opened or closed.

According to the switch in accordance with the present invention, at least one connection which can be in direct contact with outside air, out of connections between foregoing members of the switch, is provided with a sealing member. Since the switch is made up of a combination of the members, the switch has the connections between the members. As used in the specification, a connection indicates a surface (contact surface) shared by the members in a case where the members, constituting the switch, are connected to each other.

The switch has many connections such as a connection between the housing body 3a and the lid 3b, a connection between the actuator 7 and the attachment block 5, a connection between the housing body 3a and the attachment block 5, a connection between a lid of the switching mechanism 11 and a body of the switching mechanism 11, and a connection between the plunger 13 and the upper end part 15a of the operating shaft 15.

The connections include, in addition to a contact surface between members which are fixed to each other by use of a screw or the like, a contact surface between members which are merely in contact with each other and not fixed to each other. For example, the housing body 3a and the lid 3b are fixed to each other by use of a screw as illustrated in Fig. 1. Therefore, the connection between the housing body 3a and the lid 3b corresponds to the contact surface between members which are fixed to each other by use of a screw or the like. Meanwhile, the connection between the plunger 13 and the upper end part 15a of the operating shaft 15 corresponds to the contact surface between members which are merely in contact with each other and not fixed to each other.

Note that the "connection which can be in direct contact with outside air" means a connection through which outside air, in an environment in which the switch is placed, can pass when entering an inside of the housing body 3a. According to Figs. 1 and 2, examples of the connection which can be in direct contact with outside air encompass (i) the connection between the housing body 3a and the lid 3b, (ii) the connection between the actuator 7 and the attachment block 5, (iii) the connection between the housing body 3a and the attachment block 5, and (iv) a connection between the arm (lever) 7b and the rotating shaft 7a of the actuator 7.

In contrast, note that examples of the connection which can be in direct contact with outside air do not encompass (a) the connection between the lid and the body of the switching mechanism 11 provided inside the housing body 3a and (b) the connection between the plunger 13 and the upper end part 15a of the operating shaft 15.

According to Figs. 1 and 2, a sealing member 21 is provided on the lid 3b, a sealing member 23 is provided on the rotating shaft 7a of the actuator 7, and a sealing member 25 is provided on the housing body 3a. This causes (i) the connection between the housing body 3a and the lid 3b, (ii) the connection between the actuator 7 and the attachment block 5, and (iii) the connection between the housing body 3a and the attachment block 5, each of which is the corresponding connection which can be in direct contact with outside air, to be provided with respective sealing members.

The "at least one connection which can be in direct contact with outside air is provided with a sealing member" means that, out of connections which can be in direct contact with outside air, as many connections as possible are preferably provided with respective sealing members, but all of the connections are not always necessary to be provided with respective sealing members.

For example, even in a case where outside air, water, oil, and/or the like enters the connection between the arm (lever) 7b and the rotating shaft 7a of the actuator 7, this does not cause a problem in particular. This is because entry of the outside air, the water, the oil, and/or the like into the housing body 3a through the connection between the actuator 7 and the attachment block 5 is suppressed. For this reason, the connection between the arm (lever) 7 and the rotating shaft 7a of the actuator 7 is not provided with any sealing member. Needless to say, all of the connections, which can be in direct contact with outside air, can be provided with respective sealing members.

Rubber, contained in the sealing member, mainly contains fluorocarbon rubber. Note that such rubber does not contain any silicone rubber.

The sealing member contains rubber. The sealing member can be made of rubber. Alternatively, the sealing member can be made of rubber and metal, like an oil seal. The rubber, contained in the sealing member, can be one obtained by blending a plurality of types of rubber, provided that a main component of the rubber is fluorocarbon rubber.

The "main component of the rubber is fluorocarbon rubber" means that, assuming that a weight of the rubber contained in the sealing member is 100% by weight, a content of the fluorocarbon rubber is more than 50% by weight. The content of the fluorocarbon rubber accounting for the rubber contained in the sealing member is preferably 60% by weight, 70% by weight, 80% by weight, 90% by weight, 95% by weight. The closer to 100 % by weight the percent by weight is, the more preferable it is. That is, it is most preferable that the rubber contained in the sealing member be made of fluorocarbon rubber.

The rubber contained in the sealing member can further contain, as appropriate, a conventionally known reinforcing agent, filler, softener, vulcanizing agent, and/or the like, provided that the rubber mainly contains fluorocarbon rubber and does not contain silicone rubber.

Examples of the fluorocarbon rubber include conventionally known fluorocarbon rubber such as vinylidene fluoride fluorocarbon-based rubber (FKM), tetrafluoroethylene-propylene fluorocarbon-based rubber (FEPM), and tetrafluoroethylene-perfluoro vinyl ether fluorocarbon-based rubber (FFKM), and one or more of those types of fluorocarbon rubber can be used.

Examples of rubber, other than the fluorocarbon rubber that is a main component, which can be contained in the sealing member include conventionally known rubber such as natural rubber, isoprene rubber, butadiene rubber, styrene-butadiene rubber, butyl rubber, nitrile rubber, ethylene-propylene rubber, chloroprene rubber, acrylic rubber, chlorosulfonated polyethylene rubber, urethane rubber, epichlorohydrin rubber, and polysulfide rubber, and one or more of those types of rubber can be used as necessary.

Note, however, that, the less the sealing member transmits siloxane gas and the higher in thermal resistance the sealing member is, the more preferable it is. Therefore, the rubber, other than the fluorocarbon rubber, is preferably selected in consideration of a use condition of the switch, insofar as such low gas permeability and high thermal resistance of the fluorocarbon rubber are not marred.

According to the present invention, the sealing member does not contain silicone rubber. Since the sealing member does not contain silicone rubber, the switch in accordance with the present invention does not cause siloxane gas to volatize. Note that the silicone rubber in the specification means rubber in which a main chain is formed by an organosiloxane bond (SiR₂O)ₙ.

Note also that the sealing member mainly contains fluorocarbon rubber, which is much lower in gas permeability than silicone rubber, and does not contain silicone rubber. It is therefore least likely for siloxane gas to enter the inside of the housing body even in a case where the siloxane gas exists in outside air.

The fluorocarbon rubber is extremely low in gas permeability coefficient, as compared with the silicone rubber (refer to, for example, the Journal of the Society of Rubber Industry, Japan, Vol. 55, No. 10, pp. 102 to 104, which is hereinafter referred to as "Reference Literature 1"). In view of such a difference in gas permeability coefficient, it is possible to greatly reduce a possibility that siloxane gas adversely affects the switch, by employing, as the rubber contained in the sealing member, rubber which mainly contains fluorocarbon rubber and does not contain any silicone rubber.

For example, the following two cases (i) and (ii) are studied below: (i) a case where the rubber contained in the sealing member is made of fluorocarbon rubber; and (ii) a case where the rubber contained in the sealing member is made of silicone rubber. In this case, according to the Reference Literature 1, a permeability coefficient, with which the silicone rubber transmits CO₂ at a temperature of 25°C, is 1580 × 10⁻¹⁷m⁴/(N·s), whereas a permeability coefficient, with which the fluorocarbon rubber transmits CO₂ at a temperature of 30°C, is 14.3 × 10⁻¹⁷m⁴/(N·s).

In consideration of the fact that the gas permeability coefficient of the fluorocarbon rubber is equal to or less than one hundredth of that of the silicone rubber, it is considered that the switch, in which the rubber contained in the sealing member is made of fluorocarbon rubber, allows a reduction, by approximately one hundredth, in possibility of being adversely affected by siloxane gas, as compared with a switch in which rubber contained in a sealing member is made of silicone rubber.

That is, it is considered that the switch, in which the rubber contained in the sealing member is made of fluorocarbon rubber, has a life 100 times longer than that of the switch in which the rubber contained in the sealing member is made of silicone rubber.

The case has been described where the rubber contained in the sealing member is made of fluorocarbon rubber. Note, however, that the switch, in which the rubber mainly contains fluorocarbon rubber and does not contain silicone rubber, is also considered to secure a life much longer than that of the switch in which the rubber contained in the sealing member is made of silicone rubber.

As has been described, since the switch in accordance with the present invention is configured such that the rubber contained in the sealing member mainly contains fluorocarbon rubber and does not contain silicone rubber, the switch is extremely high in contact reliability and is accordingly capable of maintaining high airtightness for a long time even under a high temperature environment, as compared with conventionally known switches.

Note that, not only the sealing member, but also all of the members of the switch in accordance with the present invention preferably contain no silicone rubber.

As illustrated in Fig. 2, the limit switch 1 is configured such that (i) the connection between the housing body 3a and the lid 3b, (ii) the connection between the actuator 7 and the attachment block 5, and (iii) the connection between the housing body 3a and the attachment block 5, each of which can be in direct contact with outside air, are provided with the respective sealing members 21, 23, and 25. This configuration prevents water, oil, gas, and/or the like from entering the inside of the housing body 3a through the connections.

According to the limit switch 1, the connections are thus provided with the respective sealing members 21, 23, and 25. This causes all of main connections, which can be in direct contact with outside air, to be sealed by respective sealing members which (i) do not cause siloxane gas to volatile, (ii) do not easily let siloxane gas enter the inside of the housing body, and (iii) have high thermal resistance. Therefore, the limit switch 1 is extremely high in contact reliability and is capable of maintaining high airtightness for a long time even under a high temperature environment, as compared with conventionally known limit switches.

The "connection which can be in direct contact with outside air" is provided with the sealing member. Note, however, that the connection can be provided with one sealing member or two or more sealing members.

For example, in a case of the connection between the actuator 7 and the attachment block 5, a single sealing member can be provided on the rotating shaft 7a of the actuator 7. Alternatively, two or more sealing members can be coaxially provided on the rotating shaft 7a of the actuator 7. Alternatively, for example, in a case of the connection between the housing body 3a and the attachment block 5, a single sealing member can be provided on a ceiling of the housing body 3a. Alternatively, two or more sealing members can be concentrically provided on the ceiling of the housing body 3a.

The sealing member 23, with which the connection is provided between the actuator 7 and the attachment block 5, is preferably an oil seal. This allows a force, caused by the sealing member 23, pushing the rotating shaft 7a of the actuator 7 to be maintained for a long time period. It is therefore possible to increase airtightness and durability of the connection. Examples of the oil seal include conventionally known oil seals in which spring is embedded or in which no spring is embedded.

In a case where the sealing member 23 of the limit switch 1 is an oil seal, the sealing member 25, with which the connection is provided between the housing body 3a and the attachment block 5, can be arranged so as not to be in contact with the plunger 13 as illustrated in Fig. 2.

As has been described, in a case where an oil seal is not employed as the sealing member 23, it has been necessary to provide the sealing member 25 as follows in order to sufficiently prevent gas from entering the inside of the housing body 3a through the connection between the housing body 3a and the attachment block 5. That is, it has been necessary to provide the sealing member 25 illustrated in Fig 2 so that a surface of the sealing member 25 which surface faces the plunger 13 extends to a plunger 13 side so as to seal the plunger 13, that is, so as to be in close contact with a long shaft part of the plunger 13, instead of providing the sealing member 25 in a form of a ring as illustrated in Fig. 2.

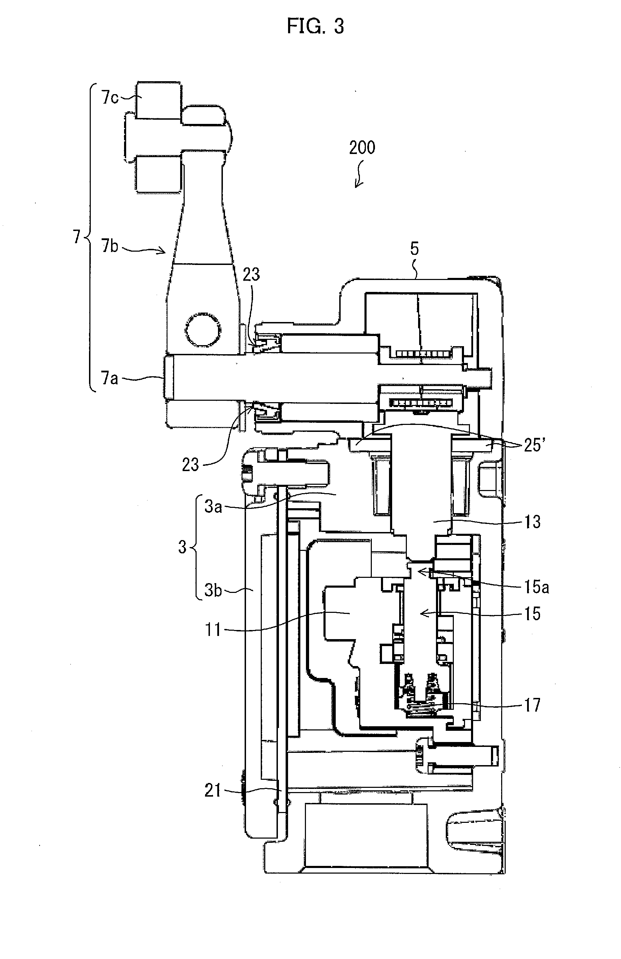

Fig. 3 is a cross-sectional view illustrating a conventional limit switch 200 in which a sealing member 23 is not an oil seal. In Fig. 3, a reference numeral 25' is a sealing member with which a connection is provided between a housing body 3a and an attachment block 5. The sealing member 25' is provided so as to seal a plunger 13 (see Fig. 3). Therefore, the sealing member 25' is subjected to displacement in response to displacement of the plunger 13. For this reason, it has been necessary that the sealing member 25' be flexible.

However, as has been described, it has been difficult to prepare, with the use of fluorocarbon rubber which is low in flexibility, a sealing member for such special sealing. According to the limit switch 1, since the sealing member 23 is an oil seal, it is possible to form the sealing member 25 into a versatile shape such as a ring, and possible to easily manufacture the sealing member 25.

Furthermore, as has been described, it is possible to employ, as the rubber contained in the sealing member 25, rubber mainly containing fluorocarbon rubber or rubber made of fluorocarbon rubber. The use of such rubber makes it possible to increase airtightness and thermal resistance of the sealing member 25.

Embodiment 1 has discussed, as an example, the case where the switch in accordance with the present invention is a limit switch. However, a type of the switch is not limited to such a limit switch and can be, for example, a microswitch or a trigger switch.

Also in a case where the switch is a microswitch or a trigger switch, it is possible to suppress contact failure caused by siloxane gas and possible to maintain high airtightness for a long time period even if the microswitch or the trigger switch is used in a state where paint, oil, and the like easily adhere to the microswitch or the trigger switch under a high temperature environment, by configuring the microswitch or the trigger switch such that (i) at least one connection which can be in direct contact with outside air, out of connections between members of the microswitch or the trigger switch, is provided with a sealing member and (ii) rubber contained in the sealing member mainly contains fluorocarbon rubber and does not contain silicone rubber. It is therefore possible to appropriately protect a contact point of a switching mechanism.

The present invention is not limited to the description of the embodiments, but may be altered by a skilled person in the art within the scope of the claims. An embodiment derived from a proper combination of technical means disclosed in different embodiments is also encompassed in the technical scope of the present invention. Furthermore, a combination of technical means disclosed in different embodiments can bring about a new technical feature.

The present invention also encompasses the following invention.

A switch in accordance with the present invention is a switch including: a switching mechanism; a housing in which the switching mechanism is provided; and an actuator, which is slidable, for causing the switching mechanism to operate, at least one connection which can be in direct contact with outside air, out of connections between members of the switch, being provided with a sealing member, rubber contained in the sealing member mainly containing fluorocarbon rubber and not containing silicone rubber.

According to the above configuration, the rubber contained in the sealing member, which can be in direct contact with outside air, mainly contains fluorocarbon rubber and does not contain silicone rubber. Therefore, even in a case where the switch is used under an environment where siloxane gas volatizes from the silicone rubber, it is possible to prevent the siloxane gas from entering the switching mechanism, and accordingly possible to prevent an insulator from depositing on a contact point of the switching mechanism. As a result, it is possible to suppress contact failure.

Furthermore, the fluorocarbon rubber is extremely low in gas permeation coefficient, as compared with the silicone rubber. Therefore, according to the above configuration, even in a case where the outside air contains siloxane gas, the sealing member does not easily let the siloxane gas permeate the sealing member. Therefore, it is also possible to effectively suppress contact failure caused by the siloxane gas in the outside air.

Moreover, the fluorocarbon rubber is excellent in thermal resistance, oil resistance, and chemical resistance. Therefore, even in a case where the switch is used in a state where paint, oil, and/or the like easily adhere to the switch under a high temperature environment (for example, under an atmosphere at a temperature of up to 120°C, such as a paint line for a car), it is possible to maintain high airtightness for a long time period, and accordingly possible to appropriately protect the contact point of the switching mechanism.

The switch in accordance with the present invention is preferably arranged such that the rubber contained in the sealing member is made of fluorocarbon rubber.

According to the above configuration, the sealing member does not contain silicone rubber but is made of fluorocarbon rubber. It is therefore possible to more effectively suppress contact failure caused by siloxane gas, and accordingly possible to maintain high airtightness for a longer time period even under a high temperature environment. This makes it possible to more effectively protect the contact point of the switching mechanism.

The switch in accordance with the present invention is preferably a switch further including: an attachment block to which the actuator is attached; and a plunger for driving an upper end part of an operating shaft, the upper end part being exposed in a top surface of the switching mechanism, the plunger being supported inside the housing so as to be vertically movable, the switch being a limit switch, the housing including: a housing body; and a lid, the sealing member being provided to each of (i) connection between the housing body and the lid, (ii) connection between the actuator and the attachment block, and (iii) connection between the housing body and the attachment block (the switch is hereinafter referred to as a "limit switch A").

According to the above configuration, each of main connections, which can be in direct contact with outside air, of the limit switch A is sealed by (i) a sealing member which mainly contains fluorocarbon rubber and does not contain silicone rubber or (ii) a sealing member made of fluorocarbon rubber.

It is therefore possible to effectively suppress (i) volatilization of siloxane gas from the sealing member and (ii) permeation of siloxane gas or the like in the outside air through the sealing member, and possible to maintain high airtightness for a long time period under a high temperature environment.

Therefore, according to the limit switch which is often used under a severe environment, it is possible to effectively protect the switching mechanism, and accordingly possible to maintain a stable operation state of the limit switch for a long time period.

The switch in accordance with the present invention is preferably the limit switch A arranged such that the sealing member, with which the connection between the actuator and the attachment block is provided, is an oil seal

At the connection, a rotating shaft of the actuator is connected to the attachment block. According to the above configuration, since the sealing member is an oil seal, it is possible to further increase airtightness between the rotating shaft, which slides, and the attachment block.

Therefore, even while the rotating shaft is sliding, it is possible to more absolutely suppress permeation of siloxane gas or the like in outside air through the connection, and possible to maintain higher airtightness for a long time period even under a high temperature environment.

Therefore, it is possible to more effectively protect the switching mechanism of the limit switch, and accordingly possible to maintain a stabler operation state of the limit switch for a long time period.

The switch in accordance with the present invention is preferably the limit switch A arranged such that (i) the sealing member, with which the connection between the actuator and the attachment block is provided, is an oil seal and (ii) the sealing member, with which the connection between the housing body and the attachment block is provided, is not in contact with the plunger.

According to a conventional limit switch, an oil seal has not been employed as a sealing member with which a connection between an actuator and an attachment block is provided. Therefore, the connection has not been sufficiently sealed, so that gas could enter an inside of the conventional limit switch through the connection.

In view of the circumstances, according to the conventional limit switch, the sealing member, with which the connection between a housing body and the attachment block is provided, has been provided so as to seal a plunger, that is, so as to be in close contact with a long shaft pat of the plunger. By arranging the sealing member so as to seal the plunger in such a sealing manner, gas has been prevented from entering the inside of the housing body through the connection between the housing body and the attachment block, even in a case where the gas enters the connection between the actuator and the attachment block.

However, fluorocarbon rubber is low in flexibility. In a case where the sealing member, with which the connection between the housing body and the attachment block is provided, is provided so as to seal the plunger, that is, so as to be in close contact with the long shaft part of the plunger, the sealing member bends in response to slide of the plunger. Therefore, it has not been possible to arrange rubber contained in the sealing member so as to mainly contain fluorocarbon rubber.

That is, according to rubber mainly containing fluorocarbon rubber, it has not been possible to seal the plunger in the foregoing sealing manner and, accordingly, has not been possible to employ the rubber, mainly containing fluorocarbon rubber, for the connection between the housing body and the attachment block. For this reason, according to the conventional limit switch, it has not been possible to solve a problem of contact failure, in a contact point, caused by siloxane gas, and has not been possible to maintain high airtightness for a long time under a high temperature environment.

According to the above configuration, since an oil seal is employed as the sealing member, with which the connection between the actuator and the attachment block is provided, it is possible to sufficiently suppress entry of gas into the connection. This allows entry of the gas into the connection between the housing body and the attachment block to be suppressed.

Accordingly, it has become unnecessary to provide the sealing member, with which the connection between the housing body and the attachment block is provided, so as to be in close contact with the long shaft part of the plunger. That is, the sealing member is not necessary to be in contact with the plunger. Even in a case where the sealing member has a highly versatile shape such as an O-ring, it is possible to prevent gas from entering the inside of the housing body through the connection between the housing body and the attachment block. Since the sealing member having a highly versatile shape does not require flexibility in particular, it has become possible to employ, for the connection between the housing body and the attachment block, the rubber mainly containing fluorocarbon rubber.

Therefore, according to the above configuration, it is sufficiently possible to both (i) solve the problem of contact failure, in a contact point, caused by siloxane gas and (ii) maintain high airtightness for a long time even under a high temperature environment.

### [Examples]

### <Example 1: Confirmation of airtightness under high temperature environment>

A confirmation test for airtightness was carried out with respect to a limit switch 1, as illustrated in Figs. 1 and 2, which employed sealing members 21, 23, and 25 each containing rubber made of fluorocarbon rubber (vinylidene fluoride fluorocarbon-based rubber).

An oil seal (manufactured by NOK Corporation, VC8X14X4) was employed as the sealing member 23. The sealing member 23 was provided on a rotating shaft 7a as illustrated in Fig. 2 so as to seal a connection between an actuator 7 and an attachment block 5. A gasket was employed as the sealing member 21. The sealing member 21 was provided on a lid 3b so as to seal a connection between a housing body 3a and the lid 3b. A square ring was employed as the sealing member 25. The sealing member 25 was provided on the housing body 3a so as to seal a connection between the housing body 3a and the attachment block 5.

Next, the limit switch 1 was placed in a thermostatic chamber for 500 hours. Note that an internal temperature of the thermostatic chamber (temperature of air around the limit switch 1) was 120°C.

After 500 hours elapsed, the limit switch 1 was taken out of the thermostatic chamber, and was then subjected to the measuring and testing method in conformity with the International Standard IEC60529 so as to find an IP code. A measured result showed that the limit switch 1 had airtightness of not less than IP67. It follows that the limit switch 1 can maintain high airtightness even after being placed for a long time under a high temperature environment of 120°C.

### <Example 2: Confirmation of contact characteristic of contact point>

The following opening and closing test was conducted with respect to each contact point of limit switches 1, which were identical to that used in Example 1, so as to study (i) a contact characteristic of the each contact point which had been opened and closed and (ii) a deposit on a surface of the each contact point (Example 2).

Five limit switches 1 (hereinafter, referred to as samples A through E) were put in a thermostatic chamber, an internal temperature of which (temperature of air around the limit switches 1) was 70°C. Each contact point of the limit switches 1 was then opened and closed under the condition that (i) DC24V and 20mA were applied to resistance load, (ii) an opening and closing frequency was once per minute, and (iii) an angle at which each lever was operated was 45 degrees.

Note that the opening and closing frequency was intentionally set to a low frequency for the purpose of promoting deposition of SiO₂ on the contact point. In regard to the number of times of opening and closing of the contact point, a counter was connected to an output terminal of each PLC (Programmable Logic Controller) connected to a corresponding one of the samples A through E so as to check whether or not the number of times of opening and closing had been miscounted.

Five cables (Model Number: D4C-4N24-P3, Length: 3 m), each made of PVC, were arranged in a state where the cables were bundled. An aerosol type mold releasing agent (Daifree GA-7500, manufactured by Daikin Industries, Ltd) was sprayed on the cables for one second from a place which was 50 cm away from the cables. The aerosol type mold releasing agent was a Teflon (registered trademark)-based mold releasing agent, which is known to contain siloxane. The cables, on which the aerosol type mold releasing agent had been sprayed, were also put in the thermostatic chamber together with the samples A through E.

The samples A and B were disassembled after respective contact points were opened and closed 5,000 times. The samples C through E were disassembled after respective contact points were opened and closed 1,000,000 times. Each contact point (C contact point) of the samples A through E was then measured in terms of static contact resistance. Measurement was made under the condition that 1mA was applied with the use of the four-terminal fall-of-potential method. Note that the number of times of opening and closing of each contact point of the samples C through E was set to the number of times equal to the number of times of opening and closing of a contact point before the contact point suffers a failure in a market (20 times of opening and closing per day × 365 days × 3 years = 21,900 times).

A surface of the contact point which had been subjected to the opening and closing test was observed with the use of a scanning electron microscope (SEM). Further, a component analysis was made with respect to a deposit (a product generated due to arc) on the surface of the contact point with the use of an energy dispersive X-ray analyzer (manufactured by JEOL Ltd., model number: JSM-6490LA). An acceleration voltage was set to 10 kV. Note that a product generated due to arc is hereinafter merely referred to as an "arc product".

Furthermore, the arc product was analyzed in terms of how Si, C, Au, and Ag adhered, with the use of the energy dispersive X-ray analyzer, so as to analyze how such elements adhered to the surface of the contact point.

Table 1 shows a measured result of the static contact resistance. As shown in Table 1, each of the samples A through E, which had been subjected to the opening and closing test, had an increase in static contact resistance. Note, however, that such an increase was small and no failure was found.

**[Table 1]**

| Sample Name | Number of times of Opening and Closing | Static Contact Resistance (mΩ) | | | Difference in Count during Test |
|---|---|---|---|---|---|
| | | Before Test | After Test | Change in Static Contact Resistance | |
| A | 5,000 | 165 | 177 | 12 | No Miscount |
| B | | 163 | 180 | 17 | No Miscount |
| C | 1,000,000 | 160 | 173 | 13 | No Miscount |
| D | | 160 | 181 | 21 | No Miscount |
| E | | 165 | 175 | 10 | No Miscount |

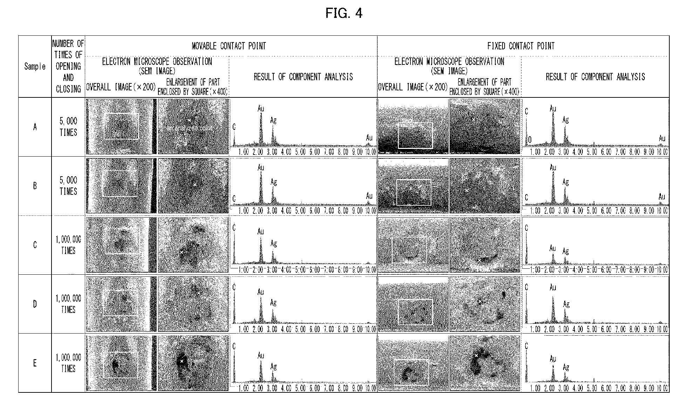

Fig. 4 is a view illustrating (i) a result of observation made, with the use of the scanning electron microscope (SEM), with respect to a surface of a movable contact point and a surface of a fixed contact point of each of the samples A through E which have been subjected to the opening and closing test and (ii) a result of the component analysis made with respect to the arc product.

Fig. 4 illustrates the following observed results (i) and (ii) with the use of the scanning electron microscope (SEM images); (i) overall images (200 magnifications); and (ii) a result of observation made, at 400 magnifications, with respect to each part, enclosed by a square, of the overall images. The arc product was deposited in the part, enclosed by the square, of each of the movable contact point and the fixed contact point. A cross (×), shown in the part which was observed at 400 magnifications, indicates a point (an analyzed point) at which the component analysis was made with the use of the energy dispersive X-ray analyzer.

As is clear from "Result of Component Analysis" illustrated in Fig. 4, C, Au, and Ag were detected as a result of the component analysis. Out of such elements, Au and Ag were materials of the contact point. Therefore, the arc product is considered to have contained C as a component. Si was not detected at any analyzed point.

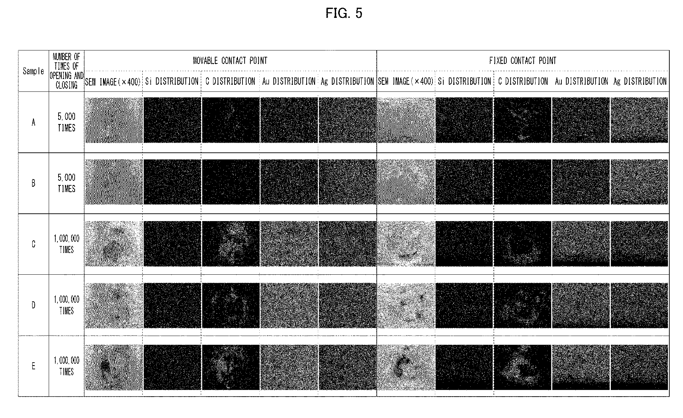

Fig. 5 is a view illustrating (i) the result of the observation made, with the use of the scanning electron microscope (SEM), with respect to the surface of the movable contact point and the surface of the fixed contact point of each of the samples A through E which have been subjected to the opening and closing test and (ii) a result of an analysis made with respect to the arc product deposited on each of the movable contact point and the fixed contact point in terms of how Si, C, Au, and Ag adhered.

It was found that, as is clear from Fig. 5, how the arc product adhered onto the surface of the contact point (which is illustrated in each of SEM images) was similar to how C distributed (which is illustrated in "C distribution"). Therefore, the arc product is considered to have contained C as a component.

Regarding Si, it was found that how the arc product adhered onto the surface of the contact point (which is illustrated in each of the SEM images) was not similar to how Si distributed (which is illustrated in "Si distribution"). Further, Si was widely found at low density in each distribution image illustrated in the "Si distribution." Therefore, Si is considered not to have existed in the arc product but to have been noise caused by the energy dispersive X-ray analyzer.

On the basis of the results, Table 2 was obtained, which shows (i) the result of the component analysis made with respect to the arc product deposited on the surface of the contact point, which had been opened or closed 5,000 times or 1,000,000 times, of each of the samples A through E (Result of Component Analysis on Surface of Contact Point) and (ii) the result of the analysis made in terms of how the elements adhered to the surface of the contact point (Result of Analysis of How Element Adhered).

**[Table 2]**

| Sample Name | Number of Times of Opening and Closing | Result of Component Analysis on Surface of Contact Point | Result of Analysis of How Element Adhered |
|---|---|---|---|
| A | 5,000 | Au, Ag (material of contact point), and C were generated. | How arc product adhered was similar to how C distributed. |
| B | | Au, Ag (material of contact point), and C were generated. | How arc product adhered was similar to how C distributed. |
| C | 1,000,000 | Au, Ag (material of contact point), and C were generated. | How arc product adhered was similar to how C distributed. |
| D | | Au, Ag (material of contact point), and C were generated. | How arc product adhered was similar to how C distributed. |
| E | | Au, Ag (material of contact point), and C were generated. | How arc product adhered was similar to how C distributed. |

From the results illustrated in Figs. 4 and 5, it was found that, in each of the samples A through E, no SiO₂ was deposited on the surface of the contact point even after the each of the samples A through E was subjected to the opening and closing test. That is, it was found that, since the limit switch 1 employed the sealing members 21, 23, and 25 each containing the rubber made of fluorocarbon rubber (vinylidene fluoride fluorocarbon-based rubber), the limit switch 1 was not adversely affected by siloxane gas derived from the mold releasing agent. Note that the slight increase in static contact resistance shown in Table 1 is considered to have been caused due to generation of C (carbon).

### <Comparative Example 1>

In Comparative Example 1, limit switches were used for comparison each of which employed, instead of the sealing members 21, 23, and 25 of the limits switch 1, sealing members each made of silicone rubber. As a sealing member serving as the sealing member 23, a sealing member made of silicone rubber was used instead of the oil seal.

10 limit switches (referred to as limit switches 1' through 10') for comparison were prepared and put in a thermostatic chamber, an internal temperature of which (temperature of air around the limit switches 1' through 10') was 70°C. Each contact point of the limit switches 1' through 10' was then opened and closed 400,000 times under the condition that (i) DC24V and 20mA were applied to resistance load, (ii) an opening and closing frequency was 120 times per minute, (iii) an angle at which each lever was operated was 26 degrees, and (iv) each dog angle was 45 degrees.

Each of the limit switches 1' through 10' was then measured in terms of static contact resistance with the use of a method identical to that described in Example 2, before and after a corresponding contact point was opened and closed 100,000 times, 200,000 times, 300,000 times, or 400,000 times. As a result, no abnormal increase was found in static contact resistance (not illustrated).

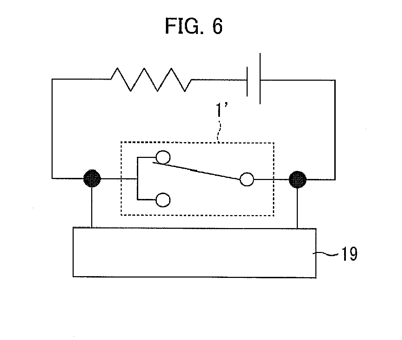

Fig. 6 is a view illustrating a measurement circuit used in a case where each of the limit switches 1' through 10' was measured in terms of dynamic contact resistance. In Fig. 6, the limit switch 1' is illustrated. As illustrated in Fig. 6, the limit switch 1' includes a C contact point made up of one movable contact point and two fixed contact points. A reference numeral 19 indicates a recorder. Note that measurement circuits similar to that illustrated in Fig. 6 were employed for the respective limit switches 2' through 10'.

The dynamic contact resistance was measured under the condition that (i) DC6V and 10mA were applied with the use of the four-terminal fall-of-potential method, (ii) a speed at which each of the limit switches 1' through 10' was pushed was 50 mm per minute, and (iii) a chart speed of the recorder 19 was 1 mm per second.

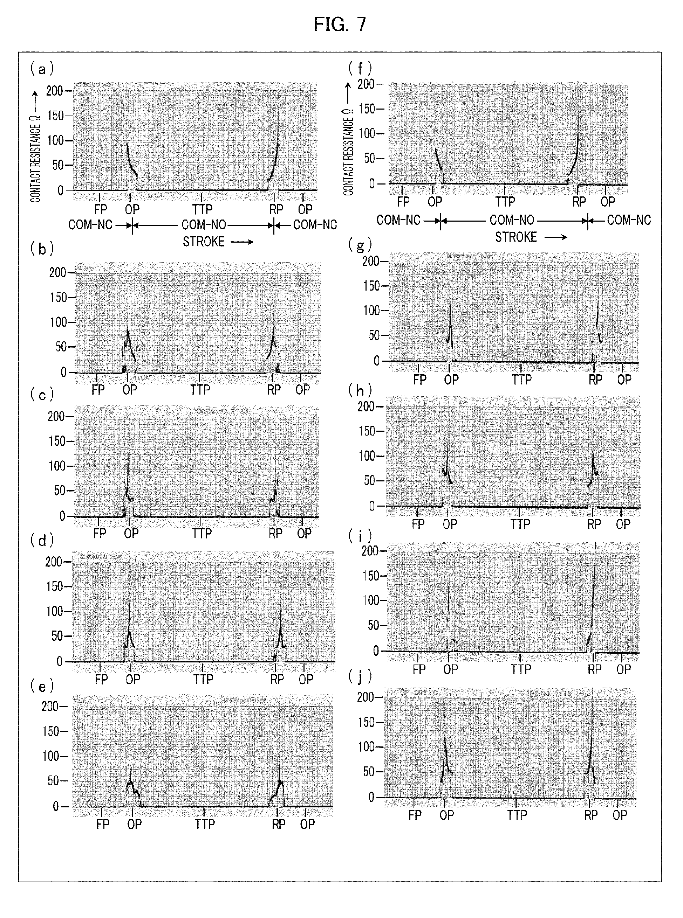

Fig. 7 is a view illustrating a measured result of the dynamic contact resistance of each of the limit switches 1' through 10'. (a) through (j) of Fig. 7 illustrate respective results of measurement made with respect to the limit switches 1' through 10'.

An FP on each horizontal axis indicates that the movable contact point, illustrated in Fig. 6, is located at a free position. An OP indicates that the movable contact point is located at an operating point. A TTP indicates that the movable contact point is located at a total travel position. An RP indicates that the movable contact point is located at a releasing point. A COM-NC indicates that the contact point is normally closed. A COM-NO indicates that the contact point is normally opened.

As illustrated in Fig. 7, each of the limit switches 1' through 10' had an increase in dynamic contact resistance in accordance with an increase in the number of times of opening and closing of a corresponding contact point. That is, according to the limit switches 1' through 10', the dynamic contact resistance is considered to have increased with time in a vicinity of a switching point at which a contact force of the contact point was weak.

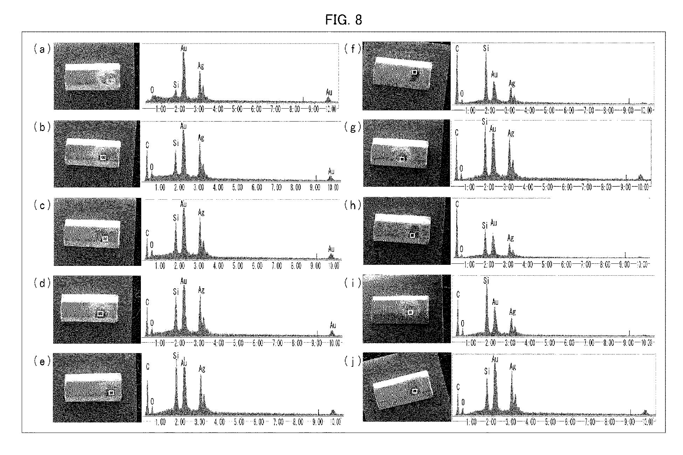

Fig. 8 is a view illustrating (i) a result of visual observation of a surface of each contact point, which has been opened and closed 400,000 times, of the limit switches 1' through 10' and (ii) a result of a component analysis made with respect to each arc product. (a) through (j) of Fig. 8 illustrate respective results of measurement made with respect to the limit switches 1' through 10'. The component analysis was, similar to that in Example 2, made with the use of an energy dispersive X-ray analyzer (manufactured by JEOL Ltd., model number: JSM-6490LA).

As illustrated in each picture in Fig. 8 (picture on each left side of (a) through (j) of Fig. 8), significant deposition of the arc product was observed on the surface of the contact point. Further, from the result of the component analysis made in part, enclosed by a square, of the each picture, the arc product was found to contain C and Si in large amount (see a chart on a right side of the each picture). Au and Ag are considered to have been detected because Au and Ag were materials of the contact point, as described in Example 2.

As has been described, Si is considered to have been detected in large amount in the arc product of each of the limit switches 1' through 10' because siloxane gas which had volatilized from the silicone rubber was broken down, then resulting Si bonded to surrounding oxygen, and SiO₂ consequently deposited on the surface of the contact point. Such deposition of SiO₂ is considered to have caused the foregoing increase in dynamic contact resistance.

Meanwhile, according to the results obtained in Example 2, the switch in accordance with the present invention did not have deposition of SiO₂ because the switch employed, as rubber contained in each of the sealing members, rubber which mainly contained fluorocarbon rubber and did not contain silicone rubber. Therefore, it can be found that the switch in accordance with the present invention is capable of stably operating for a long time period without suffering contact failure.

### Industrial Applicability

The present invention is preferably used for switches such as a limit switch and a microswitch.

### Reference Signs List

- 1: Limit Switch
- 3: Housing
- 5: Attachment block
- 7: Actuator
- 11: Switching mechanism
- 13: Plunger
- 15: Operating shaft
- 21, 23, 25: Sealing member

## Claims

1. A switch comprising:
a switching mechanism;
a housing in which the switching mechanism is provided; and
an actuator, which is slidable, for causing the switching mechanism to operate,
at least one connection which can be in direct contact with outside air, out of connections between members of the switch, being provided with a sealing member,
rubber contained in the sealing member mainly containing fluorocarbon rubber and not containing silicone rubber.

2. The switch as set forth in claim 1, wherein the rubber contained in the sealing member is made of fluorocarbon rubber.

3. A switch as set forth in claim 1 or 2, further comprising:
an attachment block to which the actuator is attached; and
a plunger for driving an upper end part of an operating shaft, the upper end part being exposed in a top surface of the switching mechanism, the plunger being supported inside the housing so as to be vertically movable,
the switch being a limit switch,
the housing including:
a housing body; and
a lid,
the sealing member being provided to each of (i) connection between the housing body and the lid, (ii) connection between the actuator and the attachment block, and (iii) connection between the housing body and the attachment block.

4. The switch as set forth in claim 3, wherein the sealing member, with which the connection between the actuator and the attachment block is provided, is an oil seal.

5. The switch as set forth in claim 4, wherein the sealing member, with which the connection between the housing body and the attachment block is provided, is not in contact with the plunger.
